# EUROPÄISCHE PATENTSCHRIFT

(11) **EP 1 791 684 B1**
(45) Veröffentlichungstag und Bekanntmachung des Hinweises auf die Patenterteilung: **27.02.2013**
(21) Anmeldenummer: 05777664.3
(22) Anmeldetag: 20.08.2005
(51) Int. Cl.: B29C 45/84

(54) **VERFAHREN ZUM BETREIBEN EINER SPRITZGIESSMASCHINE**
METHOD FOR OPERATING AN INJECTION MOULDING MACHINE
PROCÉDÉ POUR FAIRE FONCTIONNER UNE PRESSE D'INJECTION

(30) Priorität: 08.09.2004 DE 102004043300
(43) Veröffentlichungstag der Anmeldung: 06.06.2007
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2005/009029
(87) Internationale Veröffentlichungsnummer: WO 2006/027100

(56) Entgegenhaltungen:
- EP-A- 1 084 813
- EP-A- 1 318 005
- PATENT ABSTRACTS OF JAPAN Bd. 1998, Nr. 10, 31. August 1998 (1998-08-31) -& JP 10 119107 A (FANUC LTD), 12. Mai 1998 (1998-05-12)

## Beschreibung

Die Erfindung betrifft ein Verfahren zum Betreiben einer Spritzgießmaschine, insbesondere ein Verfahren zum Auslösen einer Werkzeugsicherungsvorrichtung nach dem Oberbegriff des Anspruchs 1.

Aus der EP 1318005 A1 ist ein Verfahren zum Auslösen einer Werkzeugssicherung bekannt, bei dem entlang eines Verfahrweges einer Werkzeughälfte die Bewegung der Werkzeughälfte überwacht wird. Der Antrieb der Werkzeughälfte wird abgeschaltet, wenn keine oder nur eine minimale Bewegung des Bauteils feststellbar ist. Bei diesem Verfahren handelt es sich um ein wegbasiertes Auslöseverfahren für die Werkzeugsicherung, d.h. dass bei Unterschreiten eines Verfahrweges pro Zeiteinheit der Antrieb der Werkzeughälfte abgeschaltet wird. Dieses Verfahren hat sich bewährt. Bei einem komplizierteren Werkzeugaufbau, bspw. einem Spritzgusswerkzeug mit einer Vielzahl von Schiebern, die im Verlauf der Werkzeugschließbewegung zugestellt werden müssen, ergibt das genannte Verfahren jedoch nicht immer die erwünschte Genauigkeit. Es kann zu Fehlauslösungen, beispielsweise bei Fundamentvibrationen oder durch Stöße im Hydrauliksystem kommen.

Aus der EP 0180531 ist eine Spritzgießmaschine mit einer Formschutzvorrichtung bekannt, bei der an der beweglichen Formhälfte ein Beschleunigungsaufnehmer montiert ist. Bei einer einen vorgegebenen Wert überschreitenden Verzögerung wird die Schließbewegung des Schließzylinders abgebrochen. Dieses Verfahren ist nur für einen relativ einfachen Werkzeugaufbau z.B. aus zwei Formhälften ohne Schieber geeignet, da solche Werkzeuge mit einfachem Schließbewegungsverlauf bedienbar sind. Kompliziertere Werkzeuge mit einem oder mehreren Schiebern haben hinsichtlich der Beschleunigung einen nicht konstanten Schließverlauf. Für solche Werkzeuge liefert das Verfahren gemäß der EP 0158031 ggf. unerwünschte Fehlalarme, aufgrund denen die Schließbewegung des Werkzeugs und damit der Betrieb der Spritzgussmaschine unterbrochen wird.

Aus der EP 0203199 B1 ist ein zeitbasiertes Werkzeugsicherungssystem bekannt, welches darauf basiert, dass bei einer voreingestellten Schließkraft die zu bewegende Werkzeughälfte innerhalb einer bestimmten Zeit eine vorbestimmte Strecke zurückgelegt haben muss. Erreicht die Werkzeughälfte innerhalb dieser Zeit einen Kontrollpunkt am Ende der Schließstrecke nicht, so wird davon ausgegangen, dass eine Störung vorliegt und die Schließbewegung wird unterbrochen. Dieses Verfahren hat den Nachteil, dass es durch das Bedienpersonal relativ leicht manipulierbar ist. Beispielsweise kann durch das Bedienpersonal die Schließkraft erhöht werden, wenn die Verfahrzeit in die Nähe der kritischen Zeit, z. B. durch erhöhte Reibung gelangt, um so ein Auslösen der Alarmvorrichtung zu vermeiden. Eine solche missbräuchliche Manipulation ist unerwünscht.

Die JP10119107A offenbart die Überwachung eines beweglichen Teils in einer motorgetriebenen Spritzgießmaschine, wobei ein bestimmter Maximalwert an zulässiger Motorlast fest vorgegeben wird. Bei Überschreiten der maximal zulässigen Motorlast wird eine Zeitmessung ausgelöst. Wenn über eine vorgegebene Zeitspanne die gemessene Motorlast kontinuierlich über der maximal zulässigen Motorlast liegt, wird dies als Kollision detektiert.

Aufgabe der Erfindung ist es, ein Verfahren zum Betreiben einer Spritzgießmaschine, insbesondere ein Verfahren zum Auslösen einer Werkzeugsicherung anzugeben, welche Fehlalarme zuverlässig vermeidet. Außerdem ist es Aufgabe des erfindungsgemäßen Verfahrens, kleine, kurzfristige Störungen während der Werkzeugschließphase, die nicht von einem kritischen Fehler herrühren, zu erkennen und beim Auftreten einer solchen Störung die Spritzgussmaschine nicht abzuschalten.

Diese Aufgabe wird mit einem Verfahren zum Betreiben einer Spritzgussmaschine mit den Merkmalen des Anspruchs 1 gelöst. Weitere vorteilhafte Ausführungsformen diesen erfindungsgemäßen Verfahrens sind in den Unteransprüchen angegeben.

Beim erfindungsgemäßen Verfahren wird entlang der gesamten Schließ- und/oder Öffnungsbewegung eines Formwerkzeuges einer Spritzgussmaschine, z.B. einer Formwerkzeughälfte die momentan auftretende Schließkraft (Ist-Schließkraft) gemessen. Die Ist-Schließkraft wird mit einer Soll-Schließkraft verglichen. Überschreitet die Ist-Schließkraft eine maximal zulässige Schließkraft, welche aus der Soll-Schließkraft und einer Toleranzkraft gebildet ist, so beginnt eine Zeitmessung ab dem Zeitpunkt, ab dem die Ist-Schließkraft die maximalen Schließkraft überschreitet. Ist die Dauer der Kraftüberschreitung der Ist-Kraft kleiner als ein vorgegebener Zeitwert, so wird die Schließbewegung des Formwerkzeuges trotz Überschreitung der maximal zulässigen Kraft nicht unterbrochen. Erst wenn in einem bestimmten Betriebszustand die Ist-Kraft länger als eine vorbestimmte Dauer über der maximal zulässigen Schließkraft liegt, wird die Antriebseinrichtung für das Formwerkzeug bzw. die Formwerkzeughälfte abgeschaltet.

Analog zum Überschreiten einer maximal zulässigen Schließkraft besteht eine Alternative des erfindungsgemäßen Verfahrens darin, die momentan auftretende Schließkraft mit ein der Soll-Schließkraft zu vergleichen. Außerdem ist eine minimale Schließkraft definiert, welche sich aus der Soll-Schließkraft und einer Toleranzkraft ergibt. Unterschreitet die momentane Schließkraft die minimal zulässige Schließkraft, so beginnt eine Zeitmessung ab dem Zeitpunkt, ab dem die Ist-Schließkraft die minimal zulässige Schließkraft unterschreitet. Ist die Dauer der Kraftunterschreitung der Ist-Kraft kleiner oder gleich einem vorgegebenen Zeitwert, so wird die Schließbewegung des Formwerkzeuges trotz Unterschreitung der minimal zulässigen Schließkraft nicht unterbrochen. Erst wenn in einem bestimmten Betriebszustand die Ist-Kraft länger als eine vorbestimmte Dauer unter der minimal zulässigen Schließkraft liegt, wird die Antriebseinrichtung für das Formwerkzeug bzw. die Formwerkzeughälfte abgeschaltet.

Das erfindungsgemäße Verfahren hat den besonderen Vorteil, dass kurzfristige Kraftspitzen, wie sie bspw. durch Vibrationen im Fundament aufgrund benachbarter Maschinen entstehen können ausgefiltert werden und nicht zu einem unbeabsichtigten Abschalten der Antriebseinrichtungen und damit der Spritzgussmaschine führen. Ein weiterer Vorteil ist, dass der tolerierte Kraftbereich relativ klein wählbar ist, ohne dass eine Werkzeugbeschädigung zu befürchten ist. Weiterhin vorteilhaft ist, dass durch eine Auswertung des Ist-Kraftverlaufes und durch eine Auswertung der Zeitdauern der Maximalkraftüberschreitung ein Werkzeugverschleiß frühzeitig erkennbar ist. Somit kann weit vor einem tatsächlichen Werkzeugschaden durch Wartungsarbeiten einem Werkzeugschaden vorgebeugt werden.

Weiterhin vorteilhaft ist, dass die maximale bzw. minimale Fahrkraft nur kurze Zeit auf die Werkzeughälften einwirkt, so dass dadurch die möglichen Schäden am Werkzeug oder am Formteil auf ein Minimum reduziert werden.

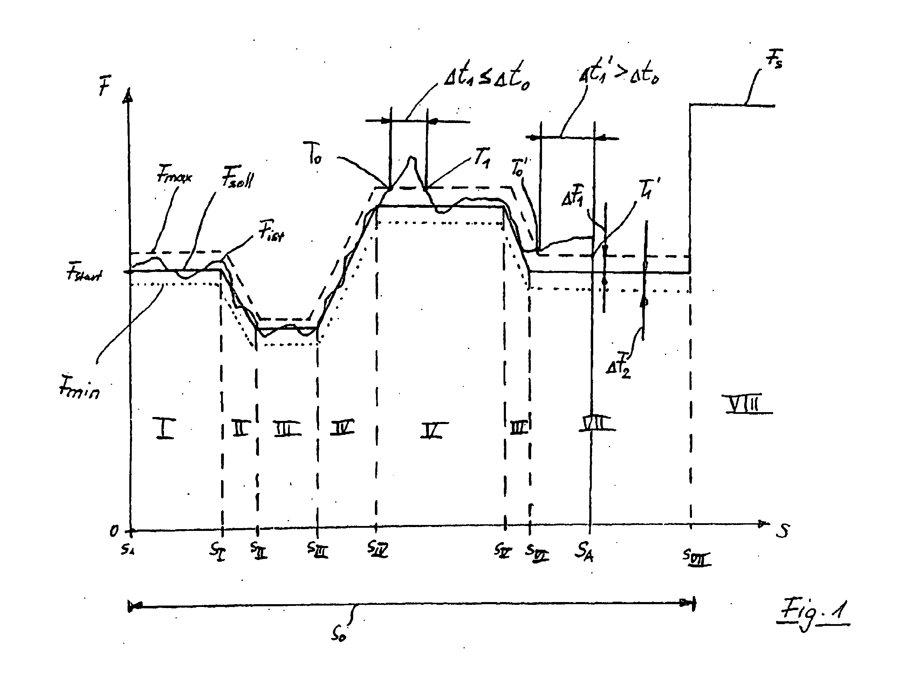

Das erfindungsgemäße Verfahren wird im folgenden anhand einer Figur beispielhaft näher erläutert. Es zeigt
- Figur 1:: Schematisch das erfindungsgemäße Verfahren am Beispiel eines Diagramms des Kraftverlaufs F über dem Schließweg s einer Spritzgussformhälfte.

Figur 1 zeigt schematisch einen Kraftverlauf entlang eines Schließweges S₀ einer Formwerkzeughälfte. Der Schließweg S₀ ist im Beispiel gemäß Figur 1 in Zonen I bis VII aufgeteilt. Eine durchgezogene Linie bestehend aus beispielsweise geraden Teilstücken repräsentiert eine Soll-Schließkraft Fₛₒₗₗ bzw. deren Verlauf entlang eines Schließweges S₀.

Eine gestrichelte Linie, die insbesondere versetzt parallel zur durchgezogenen Linie der Sollkraft Fₛₒₗₗ verläuft, repräsentiert eine maximal zulässige Schließkraft Fₘₐₓ. Der Verlauf der gestrichelten Linie der maximal zulässigen Kraft Fₘₐₓ verläuft um einen Betrag ΔF nach oben versetzt zur Linie der Soll-Schließkraft Fₛₒₗₗ. Die Wegpunkte am Ende jeder der Zonen I bis VII sind mit S_{I} bis S_{VII} bezeichnet.

In der Zone I hat die Soll-Schließkraft Fₛₒₗₗ beispielsweise den Wert Fₛₜₐᵣₜ. In der Zone II verringert sich die Soll-Schließkraft Fₛₒₗₗ beispielsweise linear auf einen niedrigeren Wert. In der Zone III bleibt die Soll-Schließkraft Fₛₒₗₗ konstant auf dem niedrigeren Wert, wobei sie in der darauffolgenden Zone IV beispielsweise linear auf eine Soll-Schließkraft Fₛₒₗₗ ansteigt, welche höher ist als die Sollstartschließkraft Fₛₜₐᵣₜ. Im Bereich der Zone V verläuft die Soll-Schließkraft Fₛₒₗₗ horizontal, um anschließend innerhalb der Zone VI beispielsweise linear wiederum auf ein niedrigeres Niveau abzunehmen. In der Zone VII verläuft die Soll-Schließkraft wiederum konstant bis zum Schließpunkt S_{VII}, bei dem die Werkzeughälften aufeinander treffen. Daran anschließend steigt die Soll-Schließkraft an, um so die Schließpressung des Formwerkzeuges zu gewährleisten. Nach Erreichen der Schließkraft kann innerhalb der Zone VIII der Kunststoffspritzvorgang beginnen.

Das erfindungsgemäße Verfahren zum Betreiben einer Spritzgussmaschine bezieht sich auf die Schließ- und/oder Öffnungsbewegung des Kunststoffspritzwerkzeuges innerhalb der beispielhaft dargestellten Zonen I bis VII. Innerhalb jeder der Zonen I bis VII ist der Sollkraft Fₛₒₗₗ dieser Zone jeweils eine maximal zulässige Kraft Fₘₐₓ zugeordnet. Die maximal zulässige Schließkraft Fₘₐₓ liegt um einen Betrag ΔF₁ höher als die Soll-Schließkraft Fₛₒₗₗ. Im Ausführungsbeispiel gemäß Figur 1 ist der Betrag ΔF₁ in allen sieben Zonen I bis VII gleich. Selbstverständlich kann der Betrag ΔF₁ auch für jede der Zonen I bis VII unterschiedlich sein oder sogar innerhalb einer Zone verschiedene Werte annehmen. Der Betrag ΔF₁ ist dabei so gewählt, dass die bei intaktem Werkzeug auftretende tatsächliche Werkzeugschließkraft F_{Ist} bei störungsfreiem Betrieb immer innerhalb des Bereichs zwischen den Linien Fₘₐₓ und Fₛₒₗₗ liegt.

Erfindungsgemäß wird während des gesamten Schließ- und/oder Öffnungsvorganges des Kunststoffspritzgusswerkzeuges die tatsächlich auftretende Schließkraft F_{Ist} laufend gemessen. So lange F_{Ist} ≤ Fₘₐₓ gilt, verläuft der Schließ- bzw. Öffnungsvorgang des Kunststoffspritzgusswerkzeuges innerhalb der vorgegebenen Toleranzen und ist somit störungsfrei.

Durch Störungen im Betrieb kann es vorkommen, dass die Ist-Schließkraft F_{Ist} den maximal zulässigen Wert für die Schließkraft Fₘₐₓ überschreitet. Ein solches Ereignis ist in der Figur 1 beispielhaft innerhalb der Zone V dargestellt, innerhalb der die Linie der Ist-Schließkraft F_{Ist} am Punkt T₀ die maximal zulässige Schließkraft Fₘₐₓ überschreitet. Sobald dies geschieht, wird erfindungsgemäß die Zeitdauer Δt₁ gemessen, innerhalb der die tatsächliche Schließkraft F_{Ist} größer ist als die maximal zulässige Schließkraft Fₘₐₓ.

Sofern die Störung, die zur Schließkraftüberschreitung geführt hat, nur kurzfristig ist, beispielsweise durch eine Vibration des Fundaments oder dergleichen, ist die Zeitspanne zwischen dem Punkt T₀ des Überschreitens der maximal zulässigen Schließkraft Fₘₐₓ und dem Punkt T₁ des Wiederunterschreitens der maximal zulässigen Schließkraft Fₘₐₓ eine Zeitspanne Δt₁, die kleiner ist als eine kritische Zeitspanne Δt₀.

Die kritische Zeitspanne Δt₀ ist ein vorbestimmter, auf das Werkzeug abgestimmter Grenzwert, welcher beispielsweise als Erfahrungswert fest vorgewählt ist. Geeigneter Weise für Δt₀ liegen im Bereich zwischen 0,1 s ≤ Δt₀ ≤ 0,6 s.

So lange die Zeitdauer Δt₁, während der die Schließkraft F_{Ist} größer ist als die maximal zulässige Fₘₐₓ, kleiner ist als die kritische Zeitdauer Δt₀, wird der Antrieb zum Schließen des Kunststoffspritzgusswerkzeuges nicht abgeschaltet. Der Schließvorgang wird somit trotz eines kurzzeitigen Überschreitens der maximal zulässigen Schließkraft Fₘₐₓ fortgesetzt.

Dauert jedoch die Überschreitung der tatsächlichen Schließkraft F_{Ist} länger als der vorbestimmte Toleranzwert Δt₀, so wird davon ausgegangen, dass eine Störung vorliegt, die das Kunststoffspritzgusswerkzeug oder das Formteil beschädigen kann. Der Antrieb für die bewegte Hälfte des Spritzgusswerkzeuges wird dann abgeschaltet.

Ein solcher Zustand ist beispielhaft innerhalb der Zone VII in Figur 1 dargestellt. Zum Zeitpunkt T₀' überschreitet die Ist-Schließkraft F_{Ist} die maximal zulässige Schließkraft Fₘₐₓ. Vom Zeitpunkt T₀' an wird die Zeit des Überschreitens der maximalen Schließkraft gemessen. Sobald die Zeitdauer des Überschreitens (hier Δt₁') größer ist als Δt₀, wird der Antrieb der Werkzeughälfte abgeschaltet. Die Werkzeughälfte bleibt in einem solchen Fall an einer Stelle S_{A} stehen. Die entsprechende Schließkraft sinkt schlagartig auf den Wert Null.

Somit ist sichergestellt, dass eine Schließkraftüberschreitung, die größer ist als Fₘₐₓ und zugleich länger dauert als eine vorbestimmte Zeitdauer Δt₀ zum Abschalten des Antriebs des Werkzeugantriebes führt.

Das Werkzeug ist so zum einen zuverlässig vor einer Überlastung, beispielsweise durch Hindernisse in der Verfahrbahn oder Klemmungen und/oder Verhakungen bei Schieberzustellungen, geschützt. Andererseits ist gewährleistet, dass durch kurzfristige, unkritische Störungen im Betrieb, die eine kurzfristige Schließkraftüberschreitung zur Folge haben, kein ungewolltes Anhalten des Werkzeuges ausgelöst wird. Somit die lässt sich die Verfügbarkeit einer Spritzgussmaschine, die nach dem erfindungsgemäßen Verfahren betrieben wird, erheblich erhöhen.

Selbstverständlich liegt es auch im Bereich der Erfindung, ggf. eine um einen Betrag ΔF₂ nach unten zur F_{Soll}-Linie versetzte Mindestschließkraft Fₘᵢₙ zu definieren (punktierte Linie in Figur 1).

Analog zum Überschreiten der Schließkraft Fₘₐₓ über eine gewisse kritische Zeitdauer kann ein Unterschreiten der Schließkraft Fₘᵢₙ über eine gewisse Mindestzeitdauer Δt₀' erfindungsgemäß als ein Anlass zum Abschalten des Formwerkzeugantriebs gewertet werden. Das Unterschreiten einer minimalen Schließkraft Fₘᵢₙ kann beispielsweise dann auftreten, wenn beim Schließen eines Formwerkzeuges ein Schieber, der beim Schließen mitgenommen werden soll, nicht gegriffen wird und somit das Werkzeug nicht ordnungsgemäß geschlossen wird. Ein nicht gefangener Schieber kann beispielsweise eine niedrigere Schließkraft F_{Ist} als die minimale Schließkraft Fₘᵢₙ in einer der Zonen I bis VII bewirken. Auch kann beispielsweise durch ein Einlaufen eines neuen Werkzeuges dieses mit der Zeit "leichter schließbar" bzw. "leichter auseinanderfahrbar" werden, so dass ein gehäuftes Unterschreiten der minimalen Schließkraft Fₘᵢₙ als Indiz dafür gewertet werden kann, dass die Einlaufphase eines Kunststoffspritzgusswerkzeuges beendet ist. In solch einem Fall kann dann die Soll-Schließkraftkurve Fₛₒₗₗ zusammen mit der maximalen Schließkraftkurve Fₘₐₓ abgesenkt werden. Dies erhöht beim weiteren Betrieb die Betriebssicherheit des Werkzeuges, da nach einer Korrektur der maximal zulässigen Schließkraft Fₘₐₓ Schließkraftüberschreitungen, die länger als Δt₀ dauern wiederum besser an das tatsächliche momentane Werkzeugschließverhalten angepasst sind und ein Nothalt werkzeugspezifisch genauer ausgelöst wird.

Selbstverständlich liegt es auch im Bereich der Erfindung, die Toleranzwerte ΔF1 und ΔF₂ zwischen der Soll-Schließkraft Fₛₒₗₗ und der maximalen bzw. minimalen Schließkraft Fmaₓ bzw. Fₘᵢₙ als festen Kraftwert zu definieren oder die Werte ΔF1 und ΔF₂ als prozentuale Abweichung vom jeweiligen Fₛₒₗₗ-Wert zu wählen.

## Patentansprüche

1. Verfahren zum Betreiben einer Spritzgießmaschine, wobei während einer Öffnungs- und/oder Schließbewegung einer Werkzeughälfte entlang eines Verfahrweges S₀ eine Kraft F_{Ist} gemessen und mit einer maximal zulässigen Kraft Fₘₐₓ und/oder einer minimal zulässigen Kraft Fₘᵢₙ, gemäß einem entlang des Verfahrweges s₀ vorgegebenen Kraftverlauf von Fₘₐₓ bzw. Fₘᵢₙ verglichen wird, wobei die vorgegebenen Werte von Fₘₐₓ bzw. Fₘᵢₙ über den Verfahrweg s₀ variieren, und wobei dann beim Überschreiten der Kraft Fₘₐₓ und/oder beim Unterschreiten der Kraft Fₘᵢₙ eine Zeitmessung begonnen wird, wobei ein Antrieb der Werkzeughälfte abgeschaltet wird, wenn das überschreiten der Kraft Fₘₐₓ und/oder das Unterschreiten der Kraft Fₘᵢₙ eine vorbestimmte Zeitdauer Δt₀ überschreitet.

2. Verfahren nach Anspruch 1 **dadurch gekennzeichnet, dass** die maximal zulässige Kraft Fₘₐₓ die Summe aus einer Soll-Kraft Fₛₒₗₗ und einer Toleranzkraft ΔF₁ ist.

3. Verfahren nach Anspruch 1 und/oder 2, **dadurch gekennzeichnet, dass** die minimale Kraft Fₘᵢₙ sich aus der Soll-Kraft Fₛₒₗₗ abzüglich einer Toleranzkraft ΔF₂ ergibt.

4. Verfahren nach einem der vorangegangen Ansprüche, **dadurch gekennzeichnet, dass** der Verfahrweg s₀ in Zonen aufgeteilt ist und dass innerhalb einer Zone die Toleranzwerte ΔF₁ und/oder ΔF₂ konstant sind.

5. Verfahren nach einem der vorangegangen Ansprüche, **dadurch gekennzeichnet, dass** die Toleranzkräfte ΔF₁ und/oder ΔF₂ einen vorbestimmten Wert haben.

6. Verfahren nach einem der vorangegangen Ansprüche, **dadurch gekennzeichnet, dass** die Toleranzkräfte ΔF₁ und/oder ΔF₂ als prozentualer Anteil der Soll-Kraft Fₛₒₗₗ definiert werden.

7. Verfahren nach einem der vorangegangenen Ansprüche, **dadurch gekennzeichnet, dass** die vorbestimmte Zeitdauer Δt₀ werkzeugspezifisch ermittelt und festgelegt wird und insbesondere im Bereich zwischen 0,1 und 0,6 s liegt.

## Claims

1. A method for operating an injection moulding machine, wherein during an opening and/or closing movement of a mould half along a travel path S₀ a force F_{Ist} is measured and is compared with a maximum permissible force Fₘₐₓ and/or with a minimum permissible force Fₘᵢₙ, according to a predetermined force pattern of Fₘₐₓ or respectively Fₘᵢₙ along the travel path s₀, wherein the predetermined values of Fₘₐₓ or respectively Fₘᵢₙ vary over the travel path S₀, and wherein then on exceeding the force Fₘₐₓ and/or on falling below the force Fₘᵢₙ a time measurement is begun, wherein a drive of the mould half is switched off when the exceeding of the force Fₘₐₓ and/or the falling below of the force Fₘᵢₙ exceeds a predetermined time period Δt₀.

2. The method according to Claim 1, **characterized in that** the maximum permissible force Fₘₐₓ is the sum of a desired force Fₛₒₗₗ and of a tolerance force ΔF₁.

3. The method according to Claim 1 and/or 2, **characterized in that** the minimum force Fₘᵢₙ results from the desired force Fₛₒₗₗ minus a tolerance force ΔF₂.

4. The method according to one of the preceding claims, **characterized in that** the travel path S₀ is divided into zones and that within a zone the tolerance values ΔF₁ and/or ΔF₂ are constant.

5. The method according to one of the preceding claims, **characterized in that** the tolerance forces ΔF₁ and/or ΔF₂ have a predetermined value.

6. The method according to one of the preceding claims, **characterized in that** the tolerance forces ΔF₁ and/or ΔF₂ are defined as a percentage proportion of the desired force Fₛₒₗₗ.

7. The method according to one of the preceding claims, **characterized in that** the predetermined time period Δt₀ is determined and established specifically with respect to the mould and in particular lies in the range between 0.1 and 0.6 s.

## Revendications

1. Procédé pour faire fonctionner une presse d'injection dans lequel, pendant un mouvement d'ouverture et/ou de fermeture d'une moitié d'outil le long d'un parcours S₀, une force F_{Ist} est mesurée et est comparée à une force maximale autorisée Fₘₐₓ et/ou à une force minimale autorisée Fₘᵢₙ, selon une trajectoire de force prédéfinie de Fₘₐₓ respectivement Fₘᵢₙ le long du parcours S₀, sachant que les valeurs prédéfinies de Fₘₐₓ respectivement Fₘᵢₙ varient sur le parcours S₀ et sachant alors qu'en cas de dépassement de la force Fₘₐₓ et/ou de passage en-dessous de la force Fₘᵢₙ, une mesure de la durée commence, sachant qu'un entraînement des moitiés d'outil est arrêté lorsque le dépassement de la force Fₘₐₓ et/ou le passage en-dessous de la force Fₘᵢₙ dépasse une durée prédéterminée Δt₀.

2. Procédé selon la revendication 1, **caractérisé en ce que** la force maximale autorisée Fₘₐₓ est la somme d'une force nominale Fₛₒₗₗ et d'une force de tolérance ΔF₁.

3. Procédé selon la revendication 1 ou 2, **caractérisé en ce que** la force minimale Fₘᵢₙ est obtenue par la force nominale Fₛₒₗₗ moins une force de tolérance ΔF₂.

4. Procédé selon l'une des revendications précédentes, **caractérisé en ce que** le parcours S₀ est divisé en zones et qu'à l'intérieur d'une zone, les valeurs de tolérance ΔF₁ et/ou ΔF₂ sont constantes.

5. Procédé selon l'une des revendications précédentes, **caractérisé en ce que** les forces de tolérance ΔF₁ et/ou ΔF₂ ont une valeur prédéterminée.

6. Procédé selon l'une des revendications précédentes, **caractérisé en ce que** les forces de tolérance ΔF₁ et/ou ΔF₂ sont définies en tant que pourcentage de la force nominale Fₛₒₗₗ.

7. Procédé selon l'une des revendications précédentes, **caractérisé en ce que** la durée prédéterminée Δt₀ est calculée et définie spécifiquement par rapport à l'outil et est située en particulier dans la plage entre 0,1 et 0,6 s.
